# EUROPEAN PATENT SPECIFICATION

(11) **EP 4 335 093 B1**
(45) Date of publication and mention of the grant of the patent: **14.10.2026**
(21) Application number: 21730827.9
(22) Date of filing: 31.05.2021
(51) Int. Cl.: H04L 47/625, H04L 49/101, H04L 49/103, H04L 49/20, H04L 49/253, H04L 49/00, H04L 49/65

(54) **DEVICE AND METHOD FOR SMART QUEUEING**
VORRICHTUNG UND VERFAHREN FÜR INTELLIGENTE WARTESCHLANGENBILDUNG
DISPOSITIF ET PROCÉDÉ DE MISE EN FILE D'ATTENTE INTELLIGENTE

(43) Date of publication of application: 13.03.2024
(73) Proprietor: Yinwang Intelligent Technologies Co., Ltd., Shenzhen, Guangdong 518110 (CN)
(72) Inventor: FONS LLUIS, Francisco, 80992 Munich (DE); GONZALEZ MARINO, Angela, 80992 Munich (DE)
(74) Representative: Roth, Sebastian
(86) International application number: PCT/EP2021/064531
(87) International publication number: WO 2022/253401

(56) References cited:
- US-A1- 2018 191 632
- US-A1- 2019 306 088
- US-A1- 2021 105 220
- MARINO ANGELA GONZALEZ ET AL: "Elastic Queueing Engine for Time Sensitive Networking", 2021 IEEE 93RD VEHICULAR TECHNOLOGY CONFERENCE (VTC2021-SPRING), IEEE, 25 April 2021 (2021-04-25), pages 1 - 7, XP033926998, DOI: 10.1109/VTC2021-SPRING51267.2021.9448758
- TIME-SENSITIVE NETWORKING TASK GROUP OF IEEE 802 1: "IEEE P802.1DG/D1.3 Draft Standard for Local and metropolitan area networks - Time-Sensitive Networking Profile for Automotive In-Vehicle Ethernet Communications", vol. 802.1dg drafts, no. d1, 18 December 2020 (2020-12-18), pages 1 - 76, XP068180872, Retrieved from the Internet <URL:http://www.ieee802.org/1/files/private/dg-drafts/d1/802-1DG-d1-3.pdf> [retrieved on 20201218]

## Description

### TECHNICAL FIELD

The present disclosure relates to communication networks, and particularly to gatewaying, which involves queueing. To handle the continuously increasing amount of tasks and to improve network performances, the disclosure proposes a network device and a corresponding method to implement smart queueing.

### BACKGROUND

Gatewaying is, by nature, a complex and high demanding process, especially in the automotive industry where many heterogeneous In-Vehicle Network (IVN) technologies coexist. This is because inside vehicles, some different sensors and actuators use different communication protocols. Therefore, there is a need to orchestrate and process a variety of technologies in order to provide the required functionalities. The device that is performing this task of different technologies handling, nowadays, is the Gateway. It can be seen that when going towards higher levels of autonomous driving, new technologies must be integrated with IVNs, such as Time Sensitive Networking (TSN).

In a conventional solution, different technologies that need to be integrated within the Gateway are connected via software, as there is no hardware link between them. For example, for handling the different protocols that are applicable in IVNs, the standard solution is to have one dedicated transceiver (OSI Layer 1) and controller (OSI Layer 2) per technology (e.g., one Controller Area Network (CAN) transceiver and controller, one Local Interconnect Network (LIN) transceiver and controller, etc.) and to perform the translation and data exchange via software layers (e.g. AUTOSAR). TSN functionalities are handled via software too (e.g. Linux), on top of the management of the protocol.

With the continuously increasing number of tasks that need to be handled at a time, traditional CPU-based processors struggle to handle all of the tasks. It is observed that software-based solutions are not able to provide the required level of performance, especially in terms of latency, real-time reaction to events, and bandwidth.

With regards to TSN processing, most conventional applications are (fully or partially) software-based. However, the approaches based on software are probably not the best choice anymore when moving to autonomous driving (AD) solutions, particularly in terms of latency and performance of next-gen L3-to-L5 AD vehicles.

Therefore, new architectures or strategies are needed for gatewaying.

US 2018/191632 A1 discloses a network interface device for implementing flexible packet scheduling, which includes a packet parser to: receive a packet; determine from analyzing the packet, a corresponding processing element that is used to process the packet; and store the packet in a queue; and a coordinator circuit to: determine whether the processing element is active in a computing unit; and modify the priority of the packet in the queue based on whether the processing element is active in the computing unit. US 2019/306088 Al discloses technologies for packet forwarding under ingress queue overflow conditions, which includes a computing device configured to receive a network packet from another computing device, determine whether a global packet buffer of the NIC is full, and determine, in response to a determination that the global packet buffer is full, whether to forward all the global packet buffer entries. US 2021/105220 Al discloses a method of receiving a packet at a multi-stage processing pipeline of the hardware forwarding element, determining, at one of the stages of the processing pipeline, to modify a setting of a particular one of the queues, and storing an identifier for the particular queue and instructions to modify the queue setting with data passed through the processing pipeline for the packet.

### SUMMARY

In view of the above, embodiments of the present disclosure aim to introduce a device and a method for smart queue management, which can be applicable in switches, routers, and gateways. In particular, an objective is to propose a hardware queueing architecture, wherein all memory is shared and accessible for every port of a device. One aim is also to be able to offload some TSN functionalities to the hardware queueing architecture without any software intervention. Another aim is to have a smart solution for data storage that allows improving system performance in terms of latency.

These and other objectives are achieved by embodiments as provided in the enclosed independent claims. Advantageous implementations of the embodiments are further defined in the dependent claims.

A first aspect of the disclosure provides a network device for queueing, wherein the network device is configured to: maintain a set of two or more queues; receive one or more data frames; inspect each of the one or more data frames and determine at least one of one or more functionality operations and a queueing operation based on the inspected data frame; and perform the determined at least one of the functionality operations and the queueing operation on the data frame, based on a status of the two or more queues and the one or more inspected data frames.

Embodiments of this disclosure accordingly propose a hardware engine, also referred to as smart queueing engine, for TSN-compliant networking devices that can be applicable in switches, routers and gateways. The proposed architecture enhances the management of already existing queueing resources to provide some TSN-compliant functionalities inside the queues, and offloading the CPU during run time by managing some functionalities via a dedicated hardware controller, in real-time. The approach of this disclosure also reduces the complexity of processing in the frame processing stage by delegating some processing functionalities in the queueing engine.

The received one or more data frames comprise a first data frame, and the queueing operation comprises: selecting a first queue from the set of queues for the first data frame based on the status of the two or more queues and the inspected first data frame; and writing the first data frame to the first queue.

After inspecting each incoming frame, e.g., the first data frame, the network device makes a decision on what action must be performed for this frame. For instance, based on a particular type of the first data frame, or a sequence number of the first data frame, one or more queues may be selected for the first data frame. Further based on the status of a queue (full or empty), one particular queue, i.e., the first queue, is selected for the first data frame.

In an implementation form of the first aspect, the network device is further configured to determine one or more queues of the set that are ready to deliver, and inspect one or more data frames from the one or more queues that are ready to deliver.

Notably, the inspection may mean reading the frame in the queue without withdrawing it from the queue. As in a First-in-First-out (FIFO) memory, reading the frame from the memory may mean that the frames are automatically shifted out from the FIFO (i.e., frames disappear from there). In this disclosure, the inspecting involves checking the content of that frame in the queue without withdrawing it from the FIFO.

The network device is arranged in a data plane and a control plane, wherein each data frame is associated with an internal instruction frame constituted by metadata of that data frame, wherein each of the set of queues is managed in the data plane, and the internal instruction frame is managed in the control plane. Like this, the inspection of a data frame consists in evaluating its associated instruction frame with no need to read the data frame from the FIFO.

In particular, the data plane may be common for all functionalities. In the data plane, the set of queues is shared across the whole device. There may be several interconnection resources in the data plane that allow to route frames from any input port to any queue, and further from any queue to any egress port. The interface between the data plane and control plane is always the same too. The control plane receives as input the incoming frame, and the status of all queues (indicated by full and empty flags). As outputs, it may control the read enable and write enable of all the queues, as well as the interconnection resources.

In an implementation form of the first aspect, the determining of the one or more queues of the set that are ready to deliver comprises: inspecting one or more internal instruction frames associated with the one or more data frames written in the one or more queues; and determining the one or more queues of the set that are ready to deliver based on the one or more inspected internal instruction frames.

The relevant information (metadata) related to each data frame can be allocated in the internal instruction frame. Notably, the inspection of frames could be done through the internal instruction frames linked to the data frames in the queue. So, the inspection occurs by analyzing the internal instruction frame, not the data frame.

In an implementation form of the first aspect, each queue of the set of queues is of a preconfigured size.

Optionally, each of the set of queues may be of small size (selectable at chipset level). This provides the right fine-grain granularity needed to be able to handle the different functionalities. The queues can be interconnected to provide larger size queues, or they can be used as parking lots if required by the functionality. The advantage of having small size queueing buffers is that there is almost no memory allocated to a functionality that is not in use. Free memory can be allocated on-demand, providing maximum flexibility of memory resources usability in the system.

In an implementation form of the first aspect, the network device comprises N ingress ports and M egress ports, each of N and M being an integer larger than 1, wherein each queue of the set of queues is connected through crossbars to at least one of the N ingress ports, and at least one of the M egress ports, wherein the network device is further configured to: write data frames received at the N ingress ports to the set of queues according to the queueing operation; and read data frames from the set of queues according to the queueing operation at the at least one of the M egress ports.

In an implementation form of the first aspect, each queue of the set of queues is connected through crossbars to each of the N ingress ports, and each of the M egress ports.

This hardware architecture allows to route frames from any input port to any queue, and then from any queue to any egress port.

In an implementation form of the first aspect, the network device is further configured to maintain a table of parameters for the set of queues, wherein the table of parameters comprises at least one group parameter applied to all queues of the set of queues, and at least one local parameter applied to a particular queue of the set of queues.

In order to handle all the shared resources (memory) and the different functionalities in a centralized manner, embodiments of this disclosure define a parameter table that allows managing all the required parameters.

In an implementation form of the first aspect, the parameters in the table of parameters correspond to the internal instruction frames associated with the one or more data frames of the set of queues.

In an implementation form of the first aspect, the at least one group parameter comprises at least one of: a number of queues of the set of queues, and a size of each queue.

Each of the one or more functionality operations is selected from a list of functionality operations by inspecting the internal instruction frame associated with each data frame, wherein the list of functionality operations comprises one or more of: frames buffering, load balancing, priority handling, frames sorting, replicates detection and elimination, replicates generation, frame preemption, frame aggregation, data decryption or encryption, time synchronization, and an operation corresponding to a time-sensitive networking algorithm.

Different functionalities can be implemented with the smart queueing engine proposed in this disclosure. The above-provided list merely includes some examples of functionalities that can be supported by embodiments of this disclosure. It should be noted that the proposed approach may also apply to other algorithms or functionalities.

In an implementation form of the first aspect, the network device is further configured to maintain the list of functionality operations, wherein the list of functionality operations indicates for each functionality operation whether it is enabled for the network device.

Notably, whether a particular functionality is enabled (or which functionalities are active in each moment in time) may be selected for the network device both at a system level and at a port level.

In an implementation form of the first aspect, the at least one local parameter comprises at least one of: an indication of whether a functionality operation of the list of functionality operations is enabled, a flag for indicating the status of the particular queue, a threshold at which the flag is to be set, and an indication whether the particular queue is ready to deliver.

Optionally, there may be more than one flags for indicating the different status of the queue, such as full, nearly full, nearly empty, or empty. Accordingly, the different thresholds may be set for the corresponding status.

In an implementation form of the first aspect, the network device is further configured to determine whether to write the first data frame to the first queue based further on the table of parameters for the set of queues.

In an implementation form of the first aspect, when frames sorting is enabled as one of the functionality operations for the network device, wherein when the received one or more data frames further comprises a second data frame, the network device is configured to:
write the second data frame to the first queue of the set of queues, when the second data frame is received in order with the first data frame, or select a second queue from the set of queues based on the status of the two or more queues, and write the second data frame to the second queue of the set of queues, when the second data frame is received out of order with the first data frame.

Frame sorting is a specific use case of in order delivery of frames which can be supported by embodiments of this disclosure. When a new frame arrives, the network device may check if the sequence number of the new frame is the following to the last one received. If the frames are received in order, they will be stored in the same queue, the first queue in this example. If the frames are received out of order, the network device allocates a new queue for the new frame.

In an implementation form of the first aspect, the network device is further configured to determine that the second queue is ready to deliver, when a sequence number of a data frame at a first entry of the second queue is a subsequent number of a sequence number of data frame at a last entry of the first queue.

Data frames that are received in order are ready to deliver by default. Data frames received out of order (e.g., a data frame with a higher sequence number) become ready to deliver when all the frames with smaller sequence numbers have been received. Notably, when the next in order frame has been stored in another queue, the queue for storing the frames before it (with smaller sequence numbers) can be released (free).

In an implementation form of the first aspect, when replicates detection and elimination is enabled as one of the functionality operations for the network device, wherein when the received one or more data frames further comprises a third data frame, the network device is configured to discard the third data frame when a sequence number of the third data frame equals a sequence number between a first sequence number and a last sequence number associated with a queue of the set of queues.

Notably, each queue is associated with two parameters, i.e., the first sequence number and the last sequence number, of data frames received in this queue. By comparing the sequence number of an incoming frame with these two parameters, it can be easily known whether a frame with the same sequence number has been received. It should also be noted that replicates detection and elimination is merely an example functionality. When by any processing it is decided to drop a frame, the implementation is the same.

In an implementation form of the first aspect, when frame aggregation is enabled as one of the functionality operations for the network device, wherein when the received one or more data frames further comprises a fourth data frame, the network device is configured to: write the fourth data frame to the first queue when each of the fourth data frame and the first data frame is a part of a predefined payload, and determine that the first queue is ready to deliver, when the predefined payload is complete.

In particular, in this mode, the network device may detect incoming frames of a certain protocol (e.g. CAN) that go to the same destination and then stores them in a specific buffer where aggregation will be done until a target payload is complete. Then the new frame will be released.

In an implementation form of the first aspect, the network device is further configured to determine a first processing based on one or more enabled functionality operations; provide the first data frame for the determined first processing; loop back the processed first data frame for inspecting and determining at least one of one or more functionality operations and a queueing operation based on the inspected first data frame.

In some use cases, a frame may be looped back for the second round of processing.

In an implementation form of the first aspect, the one or more enabled functionality operations comprise data encryption or data decryption.

For instance, when an input frame is encrypted, the network device may first decrypt the input frame, then loop back the decrypted frame. In the next, this frame is queued again as a new frame, and another processing can be performed over it, e.g., frame routing/forwarding. On the other hand, if a frame should be sent encrypted, the network device may first perform the data processing that is required, and then the processed frame is looped back for encryption before being transmitted.

In an implementation form of the first aspect, the network device is further configured to: when outputting the first data frame from the first queue, determine to loop back the outputted first data frame based on one or more enabled functionality operations; loop back the outputted first data frame for inspecting; and determine at least one of one or more functionality operations and a queueing operation based on the inspected first data frame.

In an implementation form of the first aspect, the one or more enabled functionality operations comprise time synchronization.

Notably, an output sync frame timestamp is needed to generate a follow-up (F_up) frame. In this use case, the network device may loop back the sync frame and use it to process the follow-up frame.

In an implementation form of the first aspect, when frame preemption is enabled as one of the functionality operations for the network device, the set of queues comprises one or more express queues and one or more preemptable queues, wherein the network device is configured to: determine an express queue becomes ready to deliver when a preemptable queue is in transmission; stop transmission from the preemptable queue and send data from the preemptable queue to a processing stage using a loopback path; and start transmitting data from the express queue.

In an implementation form of the first aspect, the list of functionality operations and/or the table of parameters for the set of queues, is configurable.

That is, parameters for handling the shared resources and the different functionalities are selectable for the network device, both at the system level and at the port level.

A second aspect of the disclosure provides a method performed by the network device of the first aspect, wherein the method comprises: maintaining a set of two or more queues; receiving one or more data frames; inspecting each of the one or more data frames and determining at least one of one or more functionality operations and a queueing operation based on the inspected data frame; performing the determined at least one of the functionality operation and the queueing operation on the data frame, based on a status of the two or more queues and the one or more inspected data frames.

Implementation forms of the method of the second aspect may correspond to the implementation forms of the network device of the first aspect described above. The method of the second aspect and its implementation forms achieve the same advantages and effects as described above for the network device of the first aspect and its implementation forms.

A third aspect of the disclosure provides a computer program product comprising a program code for carrying out, when implemented on a processor, the method according to the second aspect and any implementation forms of the second aspect.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present disclosure will be explained in the following description of specific embodiments in relation to the enclosed drawings, in which:
- FIG. 1: shows a general architecture of a gateway;
- FIG. 2: shows a network device according to an embodiment of the disclosure;
- FIG. 3: shows a high level view of a network device according to an embodiment of the disclosure;
- FIG. 4: shows a functional view of a network device according to an embodiment of the disclosure;
- FIG. 5: shows an internal architecture of a network device according to an embodiment of the disclosure;
- FIG. 6: shows an internal architecture of a network device according to an embodiment of the disclosure;
- FIG. 7: shows control interfaces for a network device according to an embodiment of this disclosure;
- FIG. 8: shows a write interface flow diagram for a network device according to an embodiment of this disclosure;
- FIG. 9: shows a read interface flow diagram for a network device according to an embodiment of this disclosure;
- FIG. 10: shows a queueing operation in a network device according to an embodiment of this disclosure;
- FIG. 11: shows a queueing operation in a network device according to an embodiment of this disclosure;
- FIG. 12: shows a queueing operation in a network device according to an embodiment of this disclosure;
- FIG. 13: shows a queueing operation in a network device according to an embodiment of this disclosure;
- FIG. 14: shows a queueing operation in a network device according to an embodiment of this disclosure;
- FIG. 15: shows a functionality operation in a network device according to an embodiment of this disclosure;
- FIG. 16: shows a functionality operation in a network device according to an embodiment of this disclosure;
- FIG. 17: shows a functionality operation in a network device according to an embodiment of this disclosure;
- FIG. 18: shows a functionality operation in a network device according to an embodiment of this disclosure; and
- FIG. 19: shows a method according to an embodiment of the disclosure.

### DETAILED DESCRIPTION OF EMBODIMENTS

Illustrative embodiments of a method, device, and program product for smart queue management in a network device are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

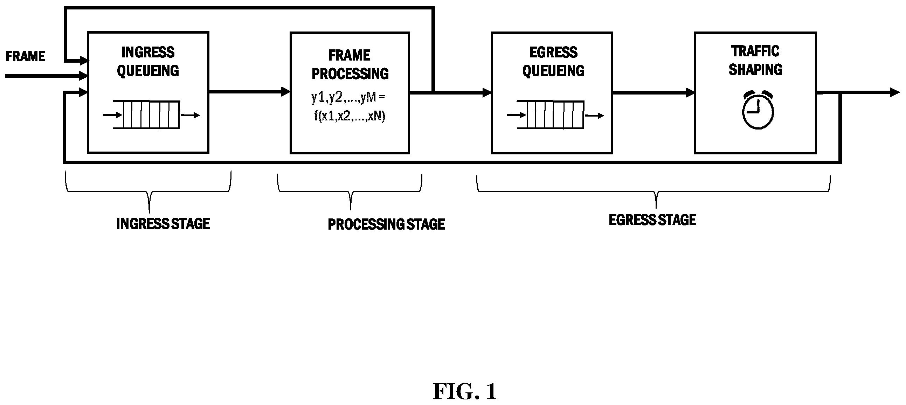

FIG. 1 shows a general architecture of a gateway consisting of an ingress stage, a processing stage and an egress stage. The egress stage is composed of egress queues that store frames and a traffic shaping controller that manages which queue is the one that is allowed to transmit in each moment.

Effective frames queueing is a key part of the gatewaying/routing solution, since the latency introduced by queuing modules has a direct impact in the forwarding latency. Therefore, having a smart solution for data storage allows improving the performance of the system in terms of latency. As previously discussed, when including TSN technologies, this becomes even more important, since the benefits that can be gotten from TSN integration are tightly related to the intrinsic architecture of the queueing system. The more flexible that the queueing engine is, the better it will allow adapting the system to the functionality required by TSN standards. By providing hardware support to TSN functionalities, the real-time network performance according to TSN standards increases significantly.

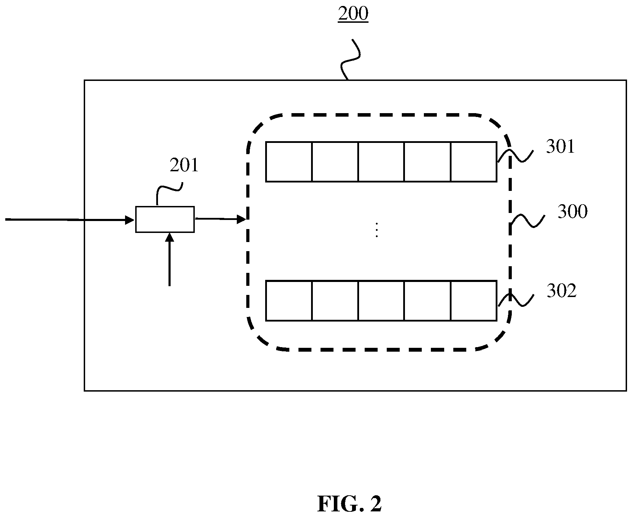

FIG. 2 shows a network device 200 for queueing according to an embodiment of the disclosure. The network device 200 may comprise processing circuitry (not shown) configured to perform, conduct or initiate the various operations of the network device 200 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The network device 200 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the network device 200 to be performed. In one embodiment, the processing circuitry comprises one or more processors and a non-transitory memory connected to the one or more processors. The non-transitory memory may carry executable program code which, when executed by the one or more processors, causes the network device 200 to perform, conduct or initiate the operations or methods described herein.

In particular, the network device 200 is configured to maintain a set 300 of two or more queues 301, 302. The network device 200 is further configured to receive one or more data frames 201. Then, the network device 200 is configured to inspect each of the one or more data frames 201 and determine at least one of one or more functionality operations and a queueing operation based on the inspected data frame 201. Further, the network device 200 is configured to perform the determined at least one of the functionality operations and the queueing operation on the data frame 201, based on a status of the two or more queues 301, 302 and the one or more inspected data frames 201.

The network device 200 may be a switch, a router, a gateway or the like. The network device 200 may be implemented directly in hardware (like a coprocessor or peripheral of a Microcontroller or SoC device).

Embodiments of this disclosure propose a smart queuing engine (the network device 200) for TSN-compliant networking devices that can be applicable in switches, routers, and gateways. The architecture proposed, enhances the management of already existing queueing resources in order to provide some TSN-compliant functionalities inside the queues, offloading the CPU during run time by managing some functionalities via a dedicated hardware controller, in real-time. This approach also reduces the complexity of processing in the frame processing stage by delegating some processing functionalities in the Queueing engine.

The received one or more data frames of the network device 200 comprise a first data frame 201, and the queueing operation comprises selecting a first queue 301 from the set of queues 300 for the first data frame 201 based on the status of the two or more queues 301, 302 and the inspected first data frame 201. The queueing operation further comprises writing the first data frame 201 to the first queue 301. According to an embodiment of this disclosure, the network device 200 may be further configured to determine one or more queues of the set 300 that are ready to deliver, and inspect one or more data frames from the one or more queues that are ready to deliver.

It may be worth mentioning that the inspection means to read the frames in the queue without withdrawing them from the queue. In a FIFO memory, if a frame is read from the queue, it is automatically shifted out from the FIFO. As defined in this embodiment, inspecting involves checking the content of that frame in the queue without withdrawing it from the FIFO.

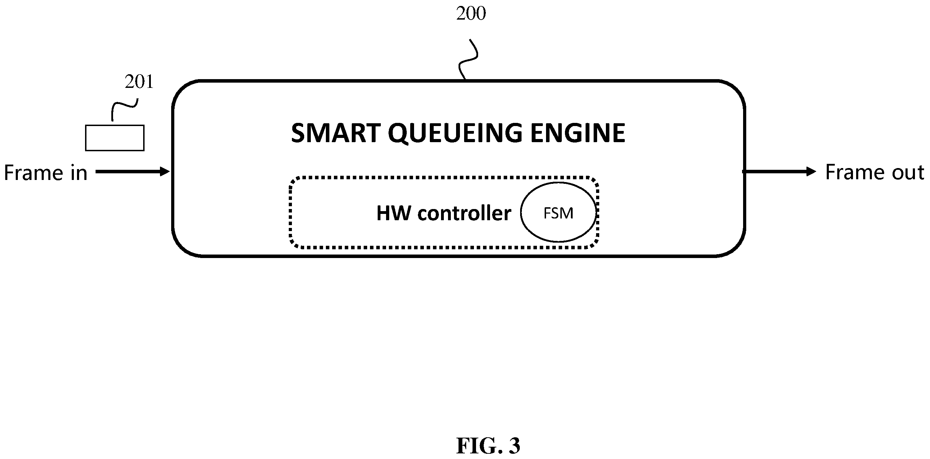

FIG. 3 depicts a high-level view of the proposed network device 200 according to an embodiment of the disclosure. In particular, a hardware controller is introduced here for managing the queueing and processing of incoming data frames, e.g. the one or more data frames 201 as shown in FIG. 2. Possibly, the hardware controller may be a finite state machine (FSM) and/or arithmetic logic unit (ALU).

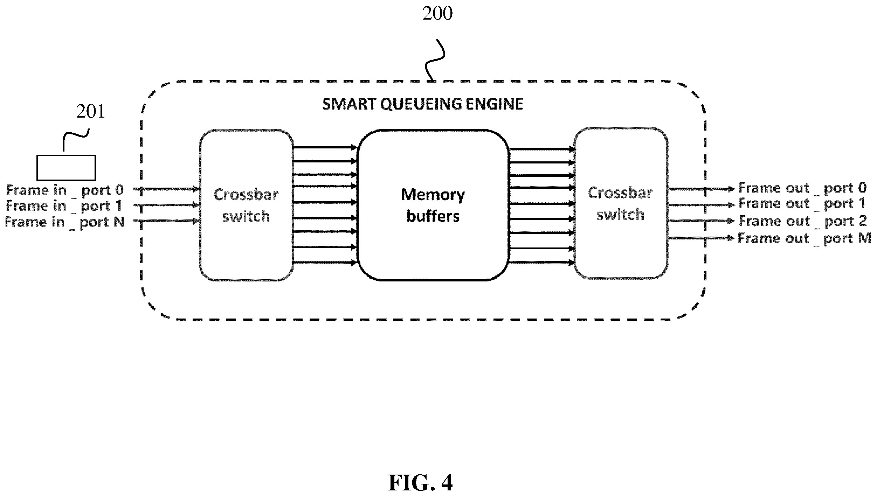

FIG. 4 shows a functional view of a network device 200 according to an embodiment of the disclosure. As it can be seen in FIG. 4, the network device 200 provides a pool of shared memory buffers and the interconnection resources needed to be able to access all buffers from a read and write perspective. In particular, the shared memory buffers include the set 300 of two or more queues 301, 302 as shown in FIG. 2. Optionally, each queue of the set of queues 300 is of a preconfigured size.

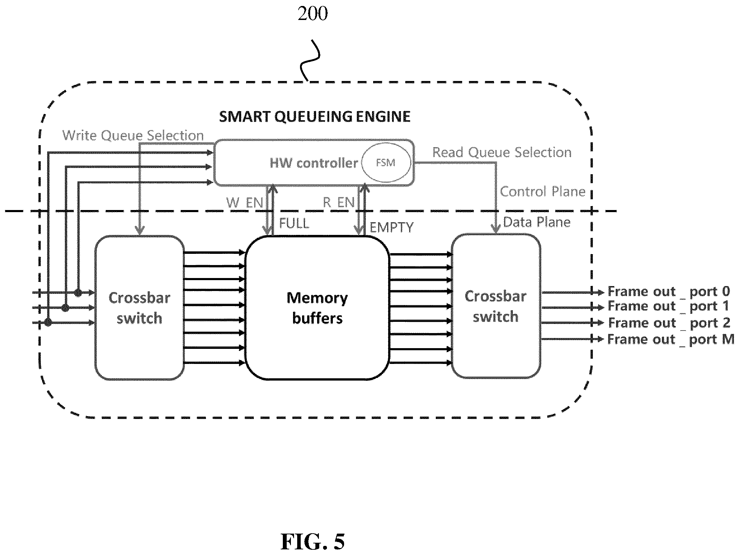

FIG. 5 shows an internal architecture of a network device 200 according to an embodiment of the disclosure. The proposed hardware architecture provides separation of control plane and data plane following the Software Defined Networking (SDN) approach, and keeps a common data plane for all functionalities that can be integrated into the network device 200. The different functionalities that can be integrated within the network device 200 are handled by the FSM (the hardware controller) in the control plane. The control plane interacts with the data plane controlling read enable and write enable memory buffers signals.

The network device 200 is arranged in a data plane and a control plane, wherein each data frame is associated with an internal instruction frame constituted by metadata of that data frame, wherein each of the set of queues 300 is managed in the data plane, and the internal instruction frame is managed in the control plane.

As described in the previous embodiments, the network device 200 may inspect data frames from a queue that is ready to deliver (i.e., read the frames in the queue without withdrawing them from the queue). This is possible through the internal instruction frame linked to the data frame in the queue. Therefore, the inspection occurs by analyzing the internal instruction frame, not the data frame. This means that is the internal instruction frame where the relevant information (metadata) related to the data frame is allocated.

Given a queue configured as FIFO, in order to inspect the full data frame inside the queue ready to output without reading it (i.e. without removing it from the FIFO), it is necessary to have a parallel bus with an internal instruction frame composed of metadata of the data frame. This instruction frame is directly readable by the controller in the control plane and its metadata contains the information for the controller to decide what to do with the data frame. Thus, each data frame in a queue is decomposed in the original data frame handled from the data plane in the queue and its parallel instruction frame (metadata) handled from the control plane.

According to an embodiment of the disclosure, the determining of the one or more queues of the set that are ready to deliver comprises: inspecting one or more internal instruction frames associated with the one or more data frames written in the one or more queues; and determining the one or more queues of the set that are ready to deliver based on the one or more inspected internal instruction frames.

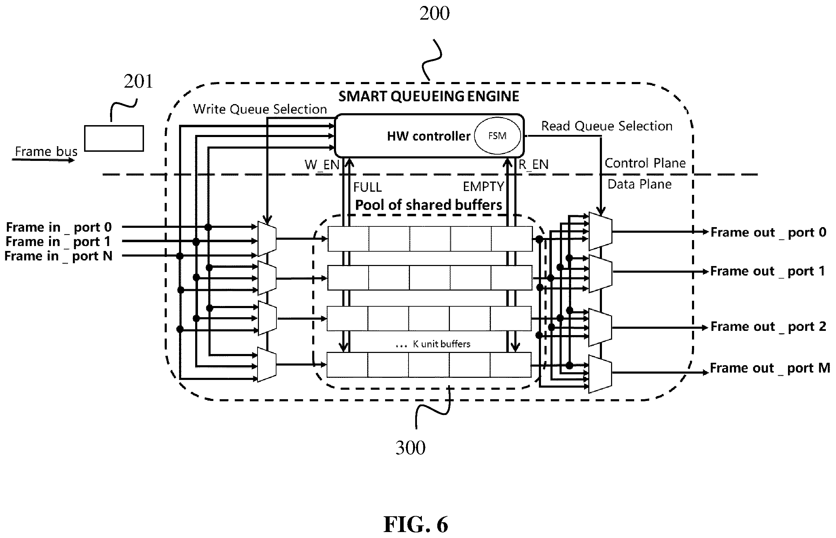

FIG. 6 illustrates the detailed microarchitecture of a network device 200 according to an embodiment of the disclosure. In particular, details about the inside of each of the functional blocks are presented.

The data plane in this embodiment is common for all functionalities. It can be seen that the pool of shared memory buffers include a set of queues 300, each one may be of a small size (selectable at chipset level) that are shared across the whole device. In the data plane, there are also several interconnection resources that allow to route frames from any input port to any queue, and further from any queue to any egress port. The interface between the data plane and control plane is always the same too. The control plane receives as input the incoming frame, and the status of all queues (indicated by full and empty flags). As outputs, it controls the read enable and write enable of all the queues, as well as the interconnection resources. The shared buffers are of selectable size, and provide the right fine-grain granularity needed to be able to handle the different functionalities. They can be interconnected in order to provide larger size queues, or they can be used as parking lots if required by the functionality. The advantage of having small size queueing buffers is that there is almost no memory allocated to a functionality that is not in use. Free memory can be allocated on-demand and also reallocated on-demand after being taken by a functionality and released, providing maximum flexibility of memory resources usability in the system.

According to an embodiment of this disclosure, the network device 200 may comprise N ingress ports and M egress ports, each of N and M being an integer larger than 1. Each queue of the set of queues 300 may be connected through crossbars to at least one of the N ingress ports, and at least one of the M egress ports. Further, the network device 200 is configured to write data frames received at the N ingress ports to the set of queues 300 according to the queueing operation. The network device 200 is further configured to read data frames from the set of queues 300 according to the queueing operation at the at least one of the M egress ports.

Possibly, each queue of the set of queues 300 is connected through crossbars to each of the N ingress ports, and each of the M egress ports. This hardware architecture allows to route frames from any input port to any queue, and then from any queue to any egress port.

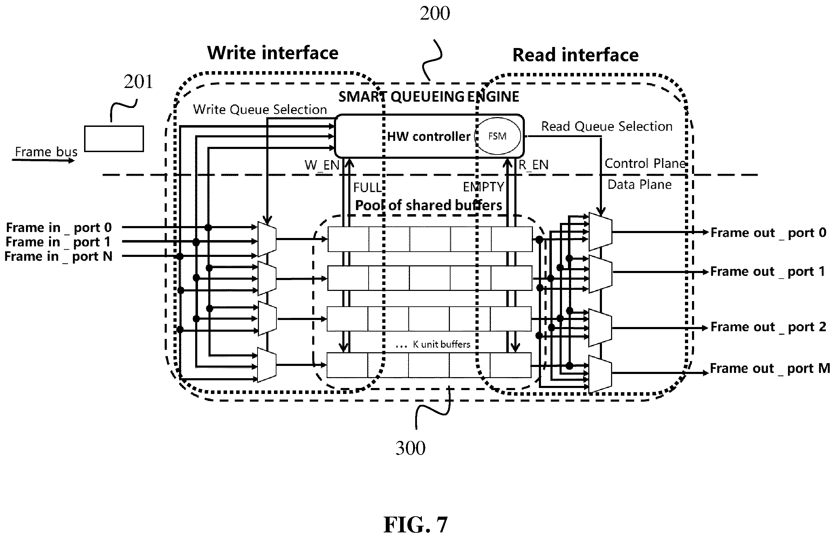

FIG. 7 shows control interfaces for the network device 200 according to an embodiment of the disclosure. In the control plane, there are two state machines in charge of the queueing engine interfaces. One state machine is in charge of the write interface, and the other state machine is in charge of the read interface. The interfaces are highlighted in FIG. 7.

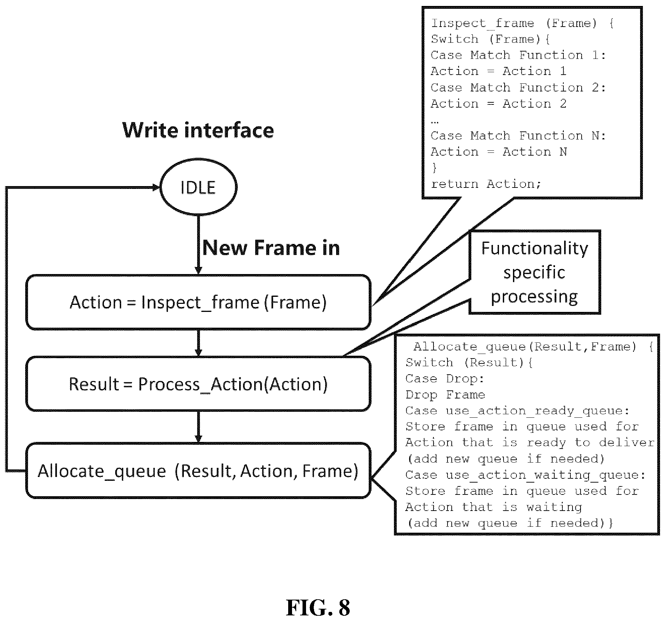

The write interface inspects the incoming frame (the one or more data frames 201) and makes decisions on what action must be performed for each frame. It interacts with the data plane controlling write enable memory buffers signals. It also decides whether to add the queue used by this incoming frame to the list of queues ready to deliver or not. The write interface flow diagram is shown in FIG. 8.

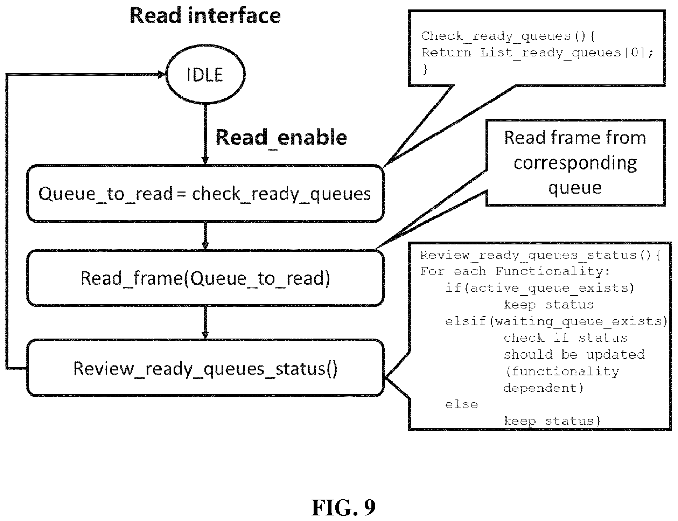

The read interface checks the list of queues that are ready to deliver, and reads frames in order. It interacts with the data plane controlling read enable memory buffers signals. It also checks if ready to deliver status must be updated. The read interface flow diagram is shown in FIG. 9.

The interface definition provides space for integration of future functionalities by isolating the functionality-dependent aspects in one single function (Process_Action in FIG. 8 for the write interface, and Queue_to_read in FIG. 9 in the Read interface). The rest of the interfaces remain the same independently of the functionality in place.

In order to handle all the shared resources (memory) and the different functionalities in a centralized manner, embodiments of this disclosure define two main tables that allow managing all the required parameters.

Table 1 defines queues functionalities configuration. According to this table, it can be selected for the network device 200 both at the system level and at port level, which functionalities are active at each moment in time.

**Table 1. Example of queues functionalities configuration table**

| **Queues functionalities configuration** | |
|---|---|
| Functionality 1 | ON |
| Functionality 2 | OFF |
| Functionality 3 | ON |
| Functionality 4 | ON |
| Functionality 1 | ON |

The second table may be a table that lists all the memory buffers in the system (which are fully shared across the system) and stores the required information in order to be able to handle them. There may be global parameters that apply to all the queues, like the number of queues and their sizes, and there may be local parameters that are to be set per queue. For instance, for each queue, it needs to be stored whether it is free or in use, and by what functionality it is being used, as well as whether it is ready to deliver frames or not. It is also possible to configure one or more thresholds at which flags must be set for each of the queues. In terms of inputs and outputs, as explained before these are always the same. Inputs are status flags from memory buffers (full, empty) and outputs are the control signals of the memory interface (write_enable, read _enable).

**Table 2. Example of queues management table**

| **Queues management table** | | | | | | | |
|---|---|---|---|---|---|---|---|
| **Global shared queues parameters** | | | | | | | |
| Number of shared buffers | | | Amount of buffers to be shared | | | | |
| Size of unit buffer | | | Size in kB of shared buffers | | | | |
| **Local per queue parameters** | | | | | | | |
| Queue index | Internal Configuration | | | Inputs | | Outputs | |
| | Use | Ready | Flags Threshold | Full | Empty | Write_en | Read_en |
| Queue 0 | Functionality 1 | 1 | Nearly_Empty = 30% | 0 | 0 | 0 | 0 |
| Queue 1 | Free | 0 | Nearly_Empty = 50% | 0 | 1 | 0 | 0 |
| Queue N | Functionality N | 1 | Nearly_Full = 70% | 0 | 0 | 0 | 0 |

According to an embodiment of the disclosure, the network device 200 may be further configured to maintain a table of parameters for the set of queues 300. The table of parameters may comprise at least one group parameter applied to all queues of the set of queues 300, and at least one local parameter applied to a particular queue of the set of queues 300.

According to an embodiment of the disclosure, one or more parameters in the table of parameters correspond to the internal instruction frames associated with the one or more data frames of the set of queues 300. Possibly, at least some of the input parameters that are required to manage the smart queueing algorithm can be obtained from the internal instruction frames (metadata) of each data frame stored in the queues.

Optionally, the at least one group parameter may comprise at least one of: a number of queues of the set of queues 300, and a size of each queue.

As previously mentioned, different functionalities can be implemented with the smart queueing engine proposed in this disclosure. The network device 200 as proposed in embodiments of this disclosure may be further configured to maintain the list of functionality operations, wherein the list of functionality operations indicates for each functionality operation whether it is enabled for the network device 200, as shown in Table 1.

Each of the one or more functionality operations may be selected from a list of functionality operations by inspecting the internal instruction frame associated with each data frame. In particular, the list of functionality operations comprises one or more of the following: frames buffering, load balancing, priority handling, frames sorting, replicates detection and elimination, replicates generation, frame preemption, frame aggregation, data decryption or encryption, time synchronization, and an operation corresponding to a time-sensitive networking algorithm.

According to an embodiment of this disclosure, the at least one local parameters may comprises at least one of:
- an indication whether a functionality operation of the list of functionality operations is enabled,
- a flag for indicating the status of the particular queue,
- a threshold at which the flag is to be set, and
- an indication whether the particular queue is ready to deliver.

Optionally, the network device 200 may be further configured to determine whether to write the first data frame 201 to the first queue 301 based further on the table of parameters for the set of queues 300.

It should be noted that a key of this disclosure is the hardware architecture proposed for the network device 200 that has been detailed in the previous section. It is composed of a common data plane for all functionalities, and a control plane that can provide application-level functionalities by storing data in a smart way. It allows implementing TSN functionalities within the queues. A key characteristic of this architecture is the fine-grain level of management of queues provided by the selectable size parameter, which allows keeping allocated unused memory to the minimum and provides flexibility to use free memory. That is, according to embodiments of the disclosure, the list of functionality operations and/or the table of parameters for the set of queues 300, is configurable.

The hardware architecture is supported by the configuration tables (Table 1 and Table 2) that define the configuration parameters that provide the right level of configurability and flexibility of the solution, as well as the write and read interfaces management. The combination of the hardware architecture, tables for management, and interfaces management provide the innovation presented in this disclosure.

Table 3 shows a list of the functionalities that are supported in this disclosure.

**Table 3. Potential use cases for smart queueing engine**

| **Potential Use Cases for SMART QUEUEING ENGINE** | |
|---|---|
| Frames buffering | Store & Forward switching mode |
| Load balancing | Dynamic depth control (QoS) |
| Priority handling | Support for Traffic Shaping or other Priority-based shaping algorithm in IEEE802.1Qbv |
| Frames sorting | Support for in order delivery in IEEE802.1CB |
| Replicates detection and elimination | Support for Replicates detection and elimination in IEEE802.1 CB |
| Replicates generation | Support for Replicates detection and elimination in IEEE802.1 CB |
| Frame preemption | Support for preempted frames transmission and reassembly in IEEE802.1Qbu |
| Frame aggregation | Support for frame tunneling in IEEE 1722 |
| Data encryption | Support for data encryption in IEEE 802.1AE (MACSec) |
| Time Synchronization | Support for time synchronization in IEEE 802.1AS |
| ... | Further use cases that may arise and still be supported |

It may be worth mentioning that several functionalities can be applicable to the same frame (not necessarily at the same time). Furthermore, several functionalities applied to different data frames can be executed in parallel, each one affecting the same or different queues. For a better understanding of this disclosure, specific use cases are described in the following.

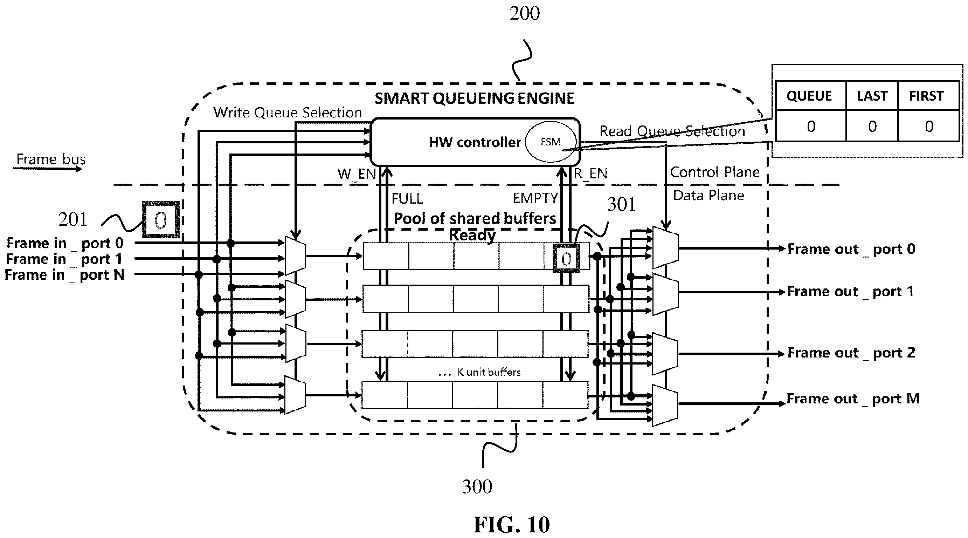

FIG. 10 - FIG. 13 show a specific use case of in order delivery of frames (frame sorting) in IEEE 802.1CB according to an embodiment of this disclosure. Each figure shows the status of queues in chronological order.

In this use case, it could happen that at some moment in time, the gateway receives a frame that, after analyzed, is classified as belonging to the 1CB category, and a specific stream ID. Once this is known, the sequence number of the frame is read and stored. For the first frame, the system allocates one of the shared buffers in order to process 1CB frames and stores the information of the sequence number.

As shown in FIG. 10, the first frame has a sequence number 0. Notably, the frame 0 may be the first data frame 201 described in the previous embodiments. Accordingly, the queue (queue 0) that allocated for storing the frame 0 is the first frame 301 described in the previous embodiments. The network device 200 may maintain a table storing an ID of a queue, and sequence numbers of the "First" and "Last" arriving frames of the queue.

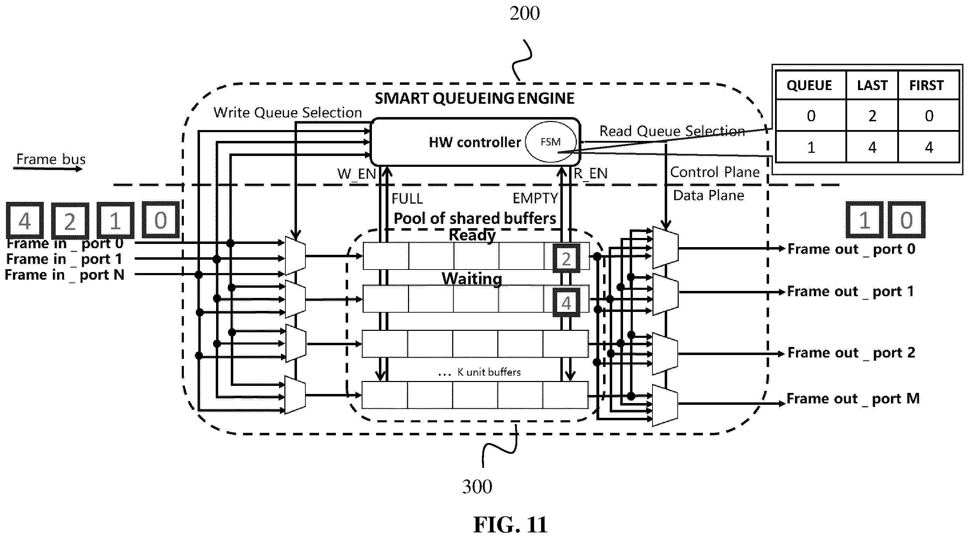

When a new frame arrives, which is classified under the same category, the network device 200 checks if the sequence number of the new frame is the following to the last one received. For instance, as shown in FIG. 11, the frame 1 and frame 2 arrive following the frame 0. In this case, the frame 1 and frame 2 will be stored in the same queue (queue 0) and delivered. Notably, while frames arrive in order, the same is happening for each frame.

At some moment in time, a frame can arrive out of order. As shown in FIG. 11, the frame 4 arrives (before the frame 3 arrives) following the frame 2. In this case, the network device 200 detects that this frame is out of order, and allocates a new queue (queue 1), which is marked as waiting to allocate this frame, for the frame 4. As shown in FIG. 11, the network device 200 updates the table according to the current status of the queues.

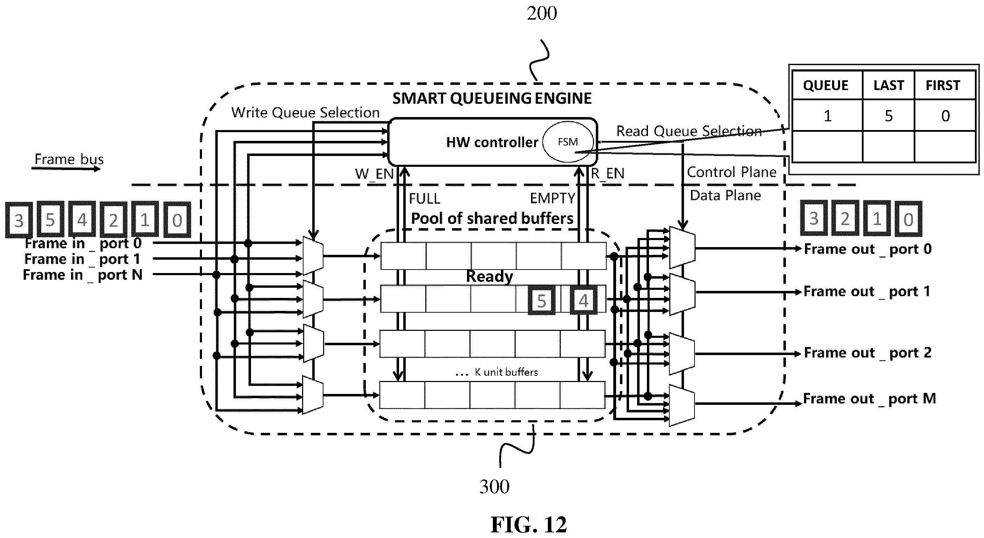

The system continues the processing of frames, in the same way, storing frames in order in the same queue, and allocating frames out of order in separate queues. When a missing frame arrives, this is also detected and queues that become empty can be released, as shown in FIG. 12. In particular, when the missing frame 3 arrives, it will be stored in the queue 0 and delivered. Accordingly, the queue 0 is released after all frames in the queue 0 (frames 0 to 3) are outputted at an egress port.

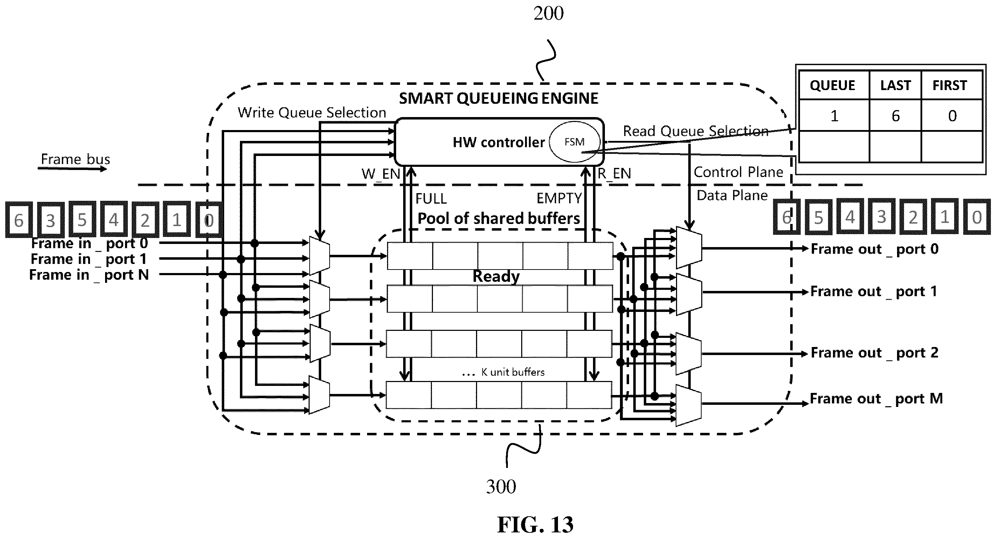

In the next, the frame 4 and frame 5 will be delivered from the queue 1, and then the next incoming frame 6 arrives (and will be stored and delivered similarly). It can be seen how from an out of order delivery of frames, the system is able to deliver the frames in order as shown in FIG. 13, by just handling in a smart way the storage of data, and without any CPU intervention.

As the user case above described, according to an embodiment of the disclosure, when frames sorting is enabled as one of the functionality operations for the network device 200, and when the received one or more data frames further comprises a second data frame, the network device 200 is configured to write the second data frame to the first queue 301 of the set of queues 300, when the second data frame is received in order with the first data frame. Alternatively, when the second data frame is received out of order with the first data frame 201, the network device 200 is configured to select a second queue from the set of queues 300 based on the status of the two or more queues, and write the second data frame to the second queue of the set of queues 300.

Optionally, the network device 200 may be further configured to determine that the first queue 301 is ready to deliver, when a sequence number of a data frame at a first entry of the second queue is a subsequent number of a sequence number of data frame at a last entry of the first queue 301.

According to another embodiment of the disclosure, if replicates detection and elimination is enabled as one of the functionality operations for the network device 200, when the received one or more data frames further comprises a third data frame, and a sequence number of the third data frame equals a sequence number of an existing data frame written in the set of queues 300, the network device 200 may be further configured to discard the third data frame. Notably, frame elimination is mentioned here merely as an example. It should be understood that when by any processing it is decided to drop a frame, the same process (discarding a frame) is followed.

A frame is discarded (e.g., when it is detected as replicate) if the sequence number matches any of the previously seen sequence numbers within a recovery window. This (whether it is a replicate) can be easily known because, in the table maintained by the network device 200, the sequence number of the "First" and "Last" arriving frames within this window are stored. By comparing the incoming sequence number with the last stored sequence numbers in the shared buffers, it is possible to know if a sequence number has already been received. It should be noted that the index in the "First" might also move dynamically so that the recovery window moves with time. For instance, even though a frame with a sequence number 0 was received, if this was a long time ago and it is no longer interesting that whether it has replicates, then in the table a sequence number 1 (for example) may be marked as first.

The proposed architecture of this disclosure can also support data aggregation and frames tunneling. Via configuration parameters, the hardware controller can be set to aggregate frames of a certain protocol that share destination into another frame format (CAN2ETHERNET, for example). In this mode, the hardware controller detects incoming frames of a certain protocol (e.g. CAN) that go to the same destination and stores them in a specific buffer where aggregation will be done until the target payload is complete, then the new frame is released.

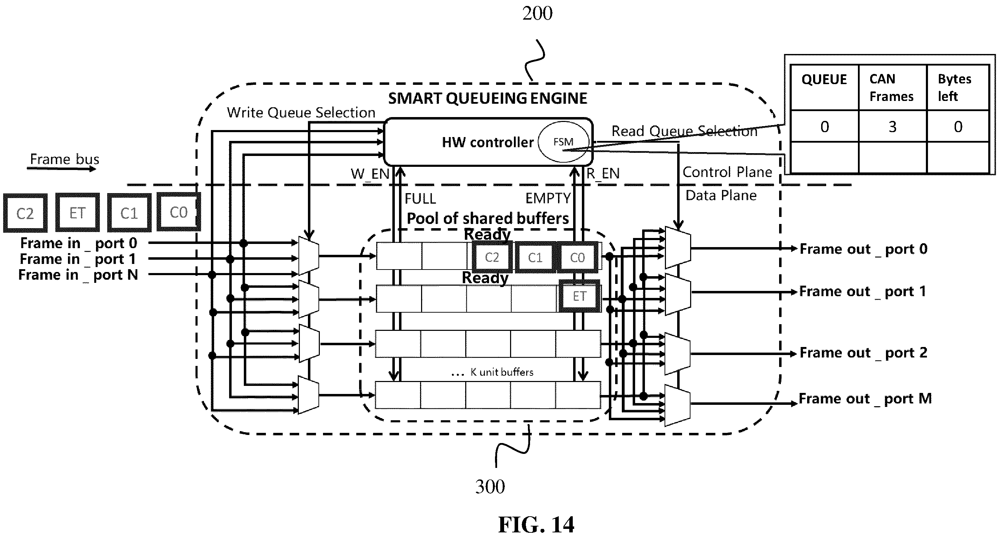

FIG. 14 shows a specific use case of data aggregation according to an embodiment of this disclosure. It can be seen that the frames C0, C1, and C2 are stored in the same queue, while the frame ET is stored in another queue. In particular, before a target payload is complete, e.g., before the frame C2 arrives, the frames C0 and C1 will be kept in the queue 0 (not delivered). After the frame C2 arrived, all three frames will be released from the queue.

According to an embodiment of the disclosure, if frame aggregation is enabled as one of the functionality operations for the network device 200, when the received one or more data frames further comprises a fourth data frame, and each of the fourth data frame and the first data frame 201 is a part of a predefined payload, the network device 200 is further configured to write the fourth data frame to the first queue 301. The network device 200 is further configured to determine that the first queue 301 is ready to deliver, when the predefined payload is complete.

Further TSN functionalities may also be implemented according to embodiments of this disclosure.

Optionally, the network device 200 may be further configured to determine a first processing based on one or more enabled functionality operations. Then, the network device 200 may be configured to provide the first data frame 201 for the determined first processing. Further, the network device 200 may be configured to loop back the processed first data frame for inspecting and determining at least one of one or more functionality operations and a queueing operation based on the inspected first data frame.

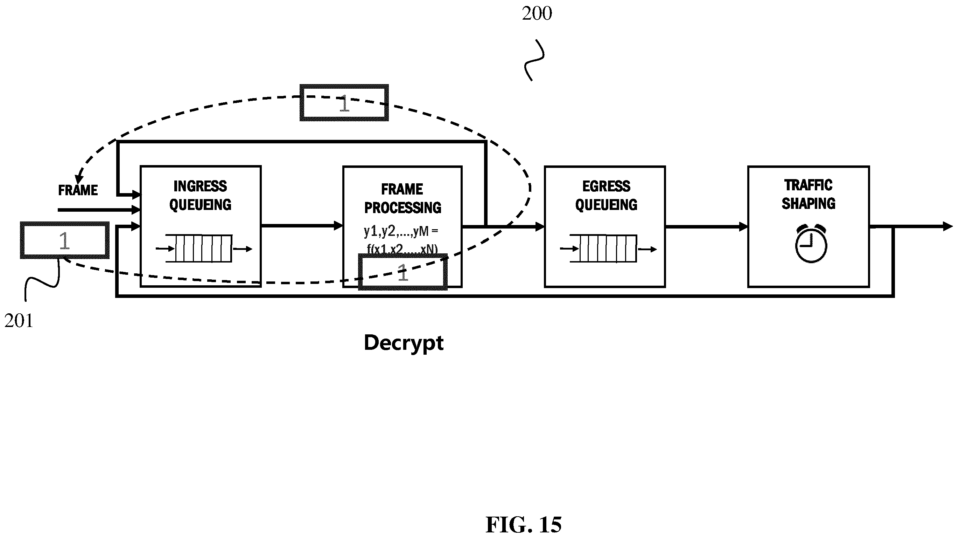

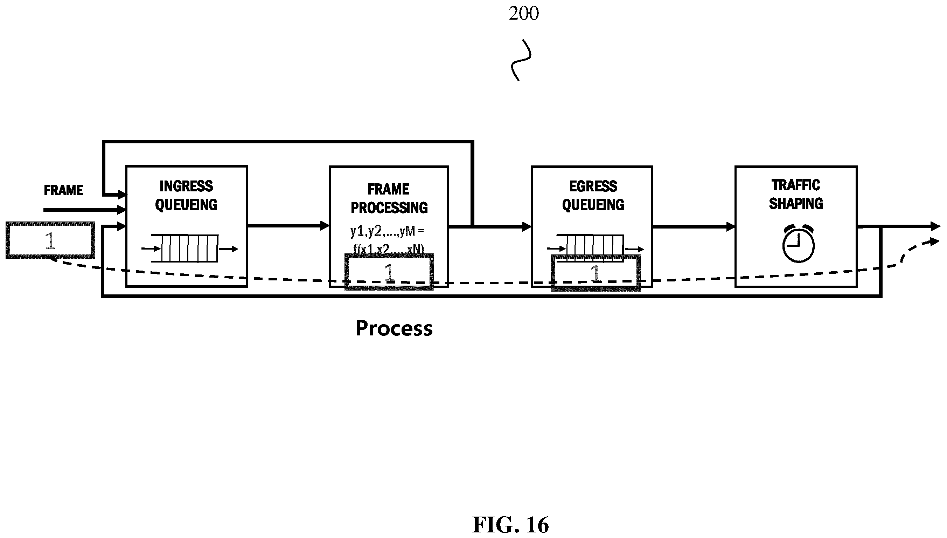

FIG. 15 and FIG. 16 show a specific use case of where data encryption or data decryption is enabled for the network device 200. According to this embodiment of this disclosure, when an input frame is encrypted, the network device 200 may first decrypt the input frame, then loop back the decrypted frame as shown in FIG. 15. In the next, this frame is queued again as a new frame, and another processing can be performed over it, as shown in FIG. 16. On the other way around, a decrypted input frame can be encrypted and then looped back to be afterward processed and routed to the egress stage.

It should be noted that this disclosure allows applying more than one functionalities to the same frame. For instance, data encryption and frames sorting maybe both enabled for the network device 200. According to an embodiment of this disclosure, the network device 200 may first decrypt the frame and then sort it (for sorting the content of the frame needs to be checked). This can be achieved through the loopback paths as above described. That is, the first time the frame comes to the queues as encrypted, then it goes to a decryption engine and comes back to the queues. The second time the frame can be sorted, or any other applicable processing can be done.

There are many possible combinations of functionalities, which can occur at the same time, such as priority handling or load balancing. In the case of priority handling, it is possible that the queues may be assigned with different priorities. The priorities may be correlated with the kind of processing performed in the queues. Priorities can be organized on several levels. For instance, at the highest level there are 8 priorities for TSN traffic classes, but then differentiate priorities within the queues according to the required functionalities for each traffic class. This can be fully selectable according to the user of the system. In the lowest level, each queue has a unique priority, and it is up to the higher-level layers how to use them. In the case of load balancing, it means that a queue can be "extended" by using a new queue for the same purpose as the first one, when the first one is full.

According to an embodiment of the disclosure, when outputting the first data frame 201 from the first queue 301, the network device 200 may be further configured to determine to loop back the outputted first data frame based on one or more enabled functionality operations. Further, the network device 200 may be configured to loop back the outputted first data frame for inspecting; and determine at least one of one or more functionality operations and a queueing operation based on the inspected first data frame.

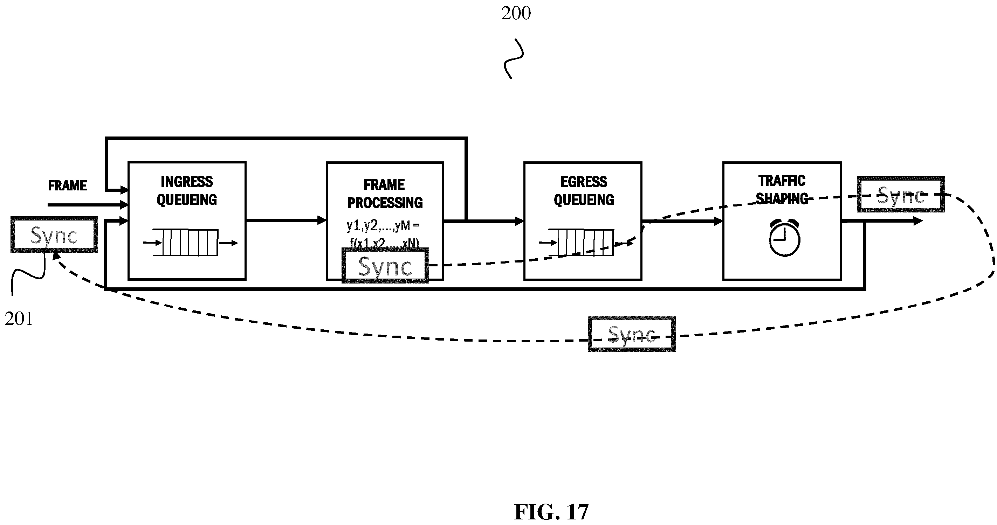

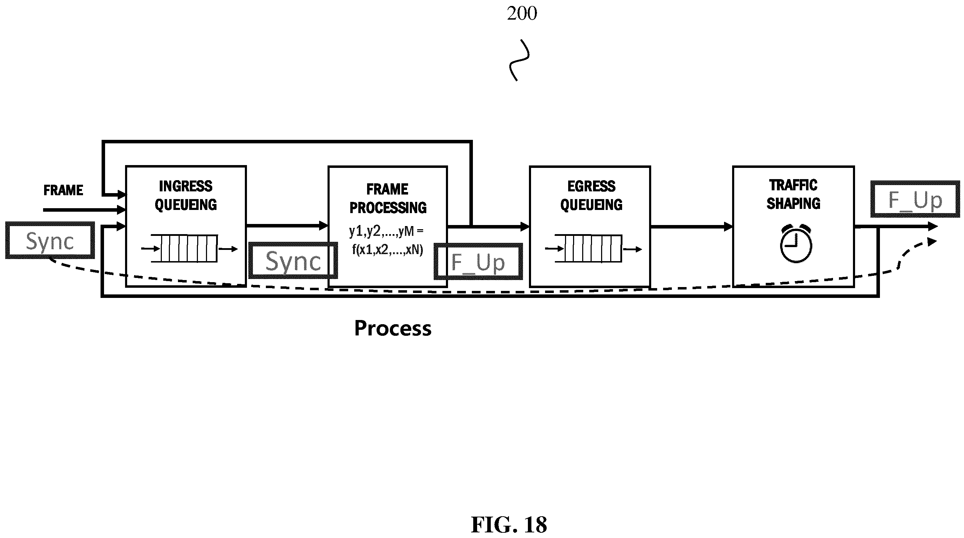

FIG. 17 and FIG. 18 show a specific use case where time synchronization is enabled for the network device 200.

In this use case, the proposed architecture of this disclosure also supports IEEE 802.1AS. During Precision Time Protocol (PTP) frames transmission, an output sync frame timestamp is needed to generate the follow-up (F_up) frame. This can be supported by looping back the sync frame and using it to process the follow-up frame.

As shown in FIG. 17, the processed first data frame 201 (i.e., that is generated in the processing stage) may be the sync frame. According to this embodiment of this disclosure, when the first data frame 201 is outputted, it is looped back as a new incoming frame. Next, this frame is then used to process the follow-up frame as shown in FIG. 18.

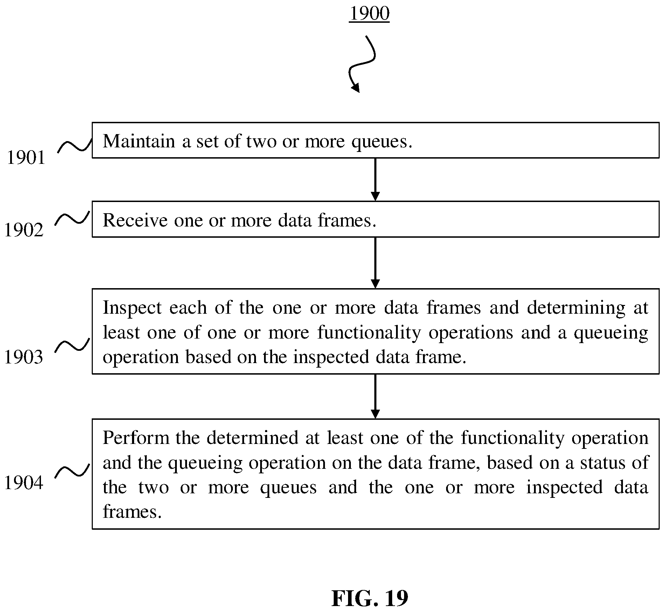

FIG. 19 shows a method 1900 according to an embodiment of the disclosure. In a particular embodiment, the method 1900 is performed by a network device 200 shown in FIG. 2 or one of FIG. 3 to FIG. 7, or one of FIG. 10 to FIG. 18. In particular, the method 1900 comprises a step 1901 of maintaining a set of two or more queues 300. The method further comprises a step 1902 of receiving one or more data frames 201. Further, the method comprises a step 1903 of inspecting each of the one or more data frames 201 and determining at least one of one or more functionality operations and a queueing operation based on the inspected data frame. Then, the method 1900 further comprises a step 1904 of performing the determined at least one of the functionality operation and the queueing operation on the data frame 201, based on a status of the two or more queues 301, 302 and the one or more inspected data frames 201.

To summarize, this disclosure proposes a hardware architecture for smart queueing management. It is composed of a common data plane for all functionalities, particularly TSN functionalities, and a control plane that can provide application-level functionalities by smartly storing data. Embodiments of the disclosure allow to implement TSN functionalities within the queues. A key characteristic of this architecture is the fine-grain level of management of queues provided by the selectable size parameter, which allows to keep allocated unused memory to the minimum and provides flexibility to use free memory. The hardware architecture is supported by the configuration tables (e.g., Table 1, Table 2) that define the configuration parameters that provide the right level of configurability and flexibility of this solution, as well as the write and read interfaces management. The combination of the hardware architecture, tables for management, and interfaces management provides the innovation presented in this disclosure.

The solution proposed in this disclosure is suitable and deployable across many industries and use cases apart from the automotive use case: from generic ICT or enterprise networks to smart manufacturing networks or IoT networks.

Embodiments of this disclosure are described in the context of automotive, addressing an innovative way of providing hardware management of TSN standards via smart management of memory resources. The most relevant singularity of automotive in-vehicle networks compared with other industrial networks maybe is the fact that in the automotive field nowadays many types of network technologies coexist, like the recently adopted automotive ethernet (100Base-T1, 1000Base-T1) and other legacy buses (CAN 2.0, CAN-FD, LIN, FlexRay). The method and system developed here are finally applied to the specific computing unit or semiconductor device synthesized in silicon that becomes the processing core of the gateway electronic control unit (ECU), typically a System-on-Chip (SoC) or Microcontroller Unit (MCU).

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the network device 200 comprise the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the network device 200 may comprise, e.g., one or more instances of a CPU, a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

It should be noted that a key of this disclosure is the hardware architecture proposed for the network device 200 that has been detailed in the previous section. It is composed of a common data plane for all functionalities, and a control plane that can provide application-level functionalities by storing data in a smart way. It allows implementing TSN functionalities within the queues. A key characteristic of this architecture is the fine-grain level of management of queues provided by the selectable size parameter, which allows keeping allocated unused memory to the minimum and provides flexibility to use free memory. That is, according to embodiments of the disclosure, the list of functionality operations and/or the table of parameters for the set of queues 300, is configurable.

The hardware architecture is supported by the configuration tables (Table 1 and Table 2) that define the configuration parameters that provide the right level of configurability and flexibility of the solution, as well as the write and read interfaces management. The combination of the hardware architecture, tables for management, and interfaces management provide the innovation presented in this disclosure.

Table 3 shows a list of the functionalities that are supported in this disclosure.

**Table 3. Potential use cases for smart queueing engine**

| **Potential Use Cases for SMART QUEUEING ENGINE** | |
|---|---|
| Frames buffering | Store & Forward switching mode |
| Load balancing | Dynamic depth control (QoS) |
| Priority handling | Support for Traffic Shaping or other Priority-based shaping algorithm in IEEE802.1Qbv |
| Frames sorting | Support for in order delivery in IEEE802.1CB |
| Replicates detection and elimination | Support for Replicates detection and elimination in IEEE802.1CB |
| Replicates generation | Support for Replicates detection and elimination in IEEE802.1CB |
| Frame preemption | Support for preempted frames transmission and reassembly in IEEE802.1Qbu |
| Frame aggregation | Support for frame tunneling in IEEE 1722 |
| Data encryption | Support for data encryption in IEEE 802.1AE (MACSec) |
| Time Synchronization | Support for time synchronization in IEEE 802.1AS |
| ... | Further use cases that may arise and still be supported |

It may be worth mentioning that several functionalities can be applicable to the same frame (not necessarily at the same time). Furthermore, several functionalities applied to different data frames can be executed in parallel, each one affecting the same or different queues. For a better understanding of this disclosure, specific use cases are described in the following.

FIG. 10 - FIG. 13 show a specific use case of in order delivery of frames (frame sorting) in IEEE 802.1CB according to an embodiment of this disclosure. Each figure shows the status of queues in chronological order.

In this use case, it could happen that at some moment in time, the gateway receives a frame that, after analyzed, is classified as belonging to the 1CB category, and a specific stream ID. Once this is known, the sequence number of the frame is read and stored. For the first frame, the system allocates one of the shared buffers in order to process 1CB frames and stores the information of the sequence number.

As shown in FIG. 10, the first frame has a sequence number 0. Notably, the frame 0 may be the first data frame 201 described in the previous embodiments. Accordingly, the queue (queue 0) that allocated for storing the frame 0 is the first frame 301 described in the previous embodiments. The network device 200 may maintain a table storing an ID of a queue, and sequence numbers of the "First" and "Last" arriving frames of the queue.

When a new frame arrives, which is classified under the same category, the network device 200 checks if the sequence number of the new frame is the following to the last one received. For instance, as shown in FIG. 11, the frame 1 and frame 2 arrive following the frame 0. In this case, the frame 1 and frame 2 will be stored in the same queue (queue 0) and delivered. Notably, while frames arrive in order, the same is happening for each frame.

At some moment in time, a frame can arrive out of order. As shown in FIG. 11, the frame 4 arrives (before the frame 3 arrives) following the frame 2. In this case, the network device 200 detects that this frame is out of order, and allocates a new queue (queue 1), which is marked as waiting to allocate this frame, for the frame 4. As shown in FIG. 11, the network device 200 updates the table according to the current status of the queues.

The system continues the processing of frames, in the same way, storing frames in order in the same queue, and allocating frames out of order in separate queues. When a missing frame arrives, this is also detected and queues that become empty can be released, as shown in FIG. 12. In particular, when the missing frame 3 arrives, it will be stored in the queue 0 and delivered. Accordingly, the queue 0 is released after all frames in the queue 0 (frames 0 to 3) are outputted at an egress port.

In the next, the frame 4 and frame 5 will be delivered from the queue 1, and then the next incoming frame 6 arrives (and will be stored and delivered similarly). It can be seen how from an out of order delivery of frames, the system is able to deliver the frames in order as shown in FIG. 13, by just handling in a smart way the storage of data, and without any CPU intervention.

As the user case above described, according to an embodiment of the disclosure, when frames sorting is enabled as one of the functionality operations for the network device 200, and when the received one or more data frames further comprises a second data frame, the network device 200 is configured to write the second data frame to the first queue 301 of the set of queues 300, when the second data frame is received in order with the first data frame. Alternatively, when the second data frame is received out of order with the first data frame 201, the network device 200 is configured to select a second queue from the set of queues 300 based on the status of the two or more queues, and write the second data frame to the second queue of the set of queues 300.

Optionally, the network device 200 may be further configured to determine that the first queue 301 is ready to deliver, when a sequence number of a data frame at a first entry of the second queue is a subsequent number of a sequence number of data frame at a last entry of the first queue 301.

According to another embodiment of the disclosure, if replicates detection and elimination is enabled as one of the functionality operations for the network device 200, when the received one or more data frames further comprises a third data frame, and a sequence number of the third data frame equals a sequence number of an existing data frame written in the set of queues 300, the network device 200 may be further configured to discard the third data frame. Notably, frame elimination is mentioned here merely as an example. It should be understood that when by any processing it is decided to drop a frame, the same process (discarding a frame) is followed.

A frame is discarded (e.g., when it is detected as replicate) if the sequence number matches any of the previously seen sequence numbers within a recovery window. This (whether it is a replicate) can be easily known because, in the table maintained by the network device 200, the sequence number of the "First" and "Last" arriving frames within this window are stored. By comparing the incoming sequence number with the last stored sequence numbers in the shared buffers, it is possible to know if a sequence number has already been received. It should be noted that the index in the "First" might also move dynamically so that the recovery window moves with time. For instance, even though a frame with a sequence number 0 was received, if this was a long time ago and it is no longer interesting that whether it has replicates, then in the table a sequence number 1 (for example) may be marked as first.

The proposed architecture of this disclosure can also support data aggregation and frames tunneling. Via configuration parameters, the hardware controller can be set to aggregate frames of a certain protocol that share destination into another frame format (CAN2ETHERNET, for example). In this mode, the hardware controller detects incoming frames of a certain protocol (e.g. CAN) that go to the same destination and stores them in a specific buffer where aggregation will be done until the target payload is complete, then the new frame is released.

FIG. 14 shows a specific use case of data aggregation according to an embodiment of this disclosure. It can be seen that the frames C0, C1, and C2 are stored in the same queue, while the frame ET is stored in another queue. In particular, before a target payload is complete, e.g., before the frame C2 arrives, the frames C0 and C1 will be kept in the queue 0 (not delivered). After the frame C2 arrived, all three frames will be released from the queue.

According to an embodiment of the disclosure, if frame aggregation is enabled as one of the functionality operations for the network device 200, when the received one or more data frames further comprises a fourth data frame, and each of the fourth data frame and the first data frame 201 is a part of a predefined payload, the network device 200 is further configured to write the fourth data frame to the first queue 301. The network device 200 is further configured to determine that the first queue 301 is ready to deliver, when the predefined payload is complete.

Further TSN functionalities may also be implemented according to embodiments of this disclosure.

Optionally, the network device 200 may be further configured to determine a first processing based on one or more enabled functionality operations. Then, the network device 200 may be configured to provide the first data frame 201 for the determined first processing. Further, the network device 200 may be configured to loop back the processed first data frame for inspecting and determining at least one of one or more functionality operations and a queueing operation based on the inspected first data frame.

FIG. 15 and FIG. 16 show a specific use case of where data encryption or data decryption is enabled for the network device 200. According to this embodiment of this disclosure, when an input frame is encrypted, the network device 200 may first decrypt the input frame, then loop back the decrypted frame as shown in FIG. 15. In the next, this frame is queued again as a new frame, and another processing can be performed over it, as shown in FIG. 16. On the other way around, a decrypted input frame can be encrypted and then looped back to be afterward processed and routed to the egress stage.

It should be noted that this disclosure allows applying more than one functionalities to the same frame. For instance, data encryption and frames sorting maybe both enabled for the network device 200. According to an embodiment of this disclosure, the network device 200 may first decrypt the frame and then sort it (for sorting the content of the frame needs to be checked). This can be achieved through the loopback paths as above described. That is, the first time the frame comes to the queues as encrypted, then it goes to a decryption engine and comes back to the queues. The second time the frame can be sorted, or any other applicable processing can be done.

There are many possible combinations of functionalities, which can occur at the same time, such as priority handling or load balancing. In the case of priority handling, it is possible that the queues may be assigned with different priorities. The priorities may be correlated with the kind of processing performed in the queues. Priorities can be organized on several levels. For instance, at the highest level there are 8 priorities for TSN traffic classes, but then differentiate priorities within the queues according to the required functionalities for each traffic class. This can be fully selectable according to the user of the system. In the lowest level, each queue has a unique priority, and it is up to the higher-level layers how to use them. In the case of load balancing, it means that a queue can be "extended" by using a new queue for the same purpose as the first one, when the first one is full.

According to an embodiment of the disclosure, when outputting the first data frame 201 from the first queue 301, the network device 200 may be further configured to determine to loop back the outputted first data frame based on one or more enabled functionality operations. Further, the network device 200 may be configured to loop back the outputted first data frame for inspecting; and determine at least one of one or more functionality operations and a queueing operation based on the inspected first data frame.

FIG. 17 and FIG. 18 show a specific use case where time synchronization is enabled for the network device 200.

In this use case, the proposed architecture of this disclosure also supports IEEE 802.1AS. During Precision Time Protocol (PTP) frames transmission, an output sync frame timestamp is needed to generate the follow-up (F_up) frame. This can be supported by looping back the sync frame and using it to process the follow-up frame.

As shown in FIG. 17, the processed first data frame 201 (i.e., that is generated in the processing stage) may be the sync frame. According to this embodiment of this disclosure, when the first data frame 201 is outputted, it is looped back as a new incoming frame. Next, this frame is then used to process the follow-up frame as shown in FIG. 18.

FIG. 19 shows a method 1900 according to an embodiment of the disclosure. In a particular embodiment, the method 1900 is performed by a network device 200 shown in FIG. 2 or one of FIG. 3 to FIG. 7, or one of FIG. 10 to FIG. 18. In particular, the method 1900 comprises a step 1901 of maintaining a set of two or more queues 300. The method further comprises a step 1902 of receiving one or more data frames 201. Further, the method comprises a step 1903 of inspecting each of the one or more data frames 201 and determining at least one of one or more functionality operations and a queueing operation based on the inspected data frame. Then, the method 1900 further comprises a step 1904 of performing the determined at least one of the functionality operation and the queueing operation on the data frame 201, based on a status of the two or more queues 301, 302 and the one or more inspected data frames 201.

To summarize, this disclosure proposes a hardware architecture for smart queueing management. It is composed of a common data plane for all functionalities, particularly TSN functionalities, and a control plane that can provide application-level functionalities by smartly storing data. Embodiments of the disclosure allow to implement TSN functionalities within the queues. A key characteristic of this architecture is the fine-grain level of management of queues provided by the selectable size parameter, which allows to keep allocated unused memory to the minimum and provides flexibility to use free memory. The hardware architecture is supported by the configuration tables (e.g., Table 1, Table 2) that define the configuration parameters that provide the right level of configurability and flexibility of this solution, as well as the write and read interfaces management. The combination of the hardware architecture, tables for management, and interfaces management provides the innovation presented in this disclosure.

The solution proposed in this disclosure is suitable and deployable across many industries and use cases apart from the automotive use case: from generic ICT or enterprise networks to smart manufacturing networks or IoT networks.

Embodiments of this disclosure are described in the context of automotive, addressing an innovative way of providing hardware management of TSN standards via smart management of memory resources. The most relevant singularity of automotive in-vehicle networks compared with other industrial networks maybe is the fact that in the automotive field nowadays many types of network technologies coexist, like the recently adopted automotive ethernet (100Base-T1, 1000Base-T1) and other legacy buses (CAN 2.0, CAN-FD, LIN, FlexRay). The method and system developed here are finally applied to the specific computing unit or semiconductor device synthesized in silicon that becomes the processing core of the gateway electronic control unit (ECU), typically a System-on-Chip (SoC) or Microcontroller Unit (MCU).

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the network device 200 comprise the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the network device 200 may comprise, e.g., one or more instances of a CPU, a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

## Claims

1. A network device (200) for queueing, wherein the network device (200) is configured to:
maintain a set (300) of two or more queues (301, 302);
receive one or more data frames (201);
inspect each of the one or more data frames (201) and determine at least one functionality operation and a queueing operation based on the inspected data frame (201); and
perform the determined at least one functionality operation and the queueing operation on the data frame (201), based on a status of the two or more queues (301, 302) and the one or more inspected data frames (201),
wherein the received one or more data frames comprise a first data frame (201), and the queueing operation comprises:
selecting a first queue (301) from the set of queues (300) for the first data frame (201) based on the status of the two or more queues (301, 302) and the inspected first data frame (201); and
writing the first data frame (201) to the first queue (301),
wherein the network device (200) is arranged in a data plane and a control plane, wherein each data frame is associated with an internal instruction frame constituted by metadata of that data frame, wherein each of the set of queues (300) is managed in the data plane, and the internal instruction frame is managed in the control plane,
wherein each of the at least one functionality operation is selected from a list of functionality operations by inspecting the internal instruction frame associated with each data frame, wherein the list of functionality operations comprises one or more of: frames buffering, load balancing, priority handling, frames sorting, replicates detection and elimination, frame preemption, frame aggregation, data decryption or encryption, time synchronization, and an operation corresponding to a time-sensitive networking algorithm.

2. The network device (200) according to claim 1, further configured to determine one or more queues of the set that are ready to deliver, and inspect one or more data frames from the one or more queues that are ready to deliver,
wherein a queue is considered ready to deliver when it contains data frames received in order, or when it contains data frames that, although received out of order, are accompanied by all preceding frames with smaller sequence numbers.

3. The network device (200) according to claim 2, wherein the determining of the one or more queues of the set that are ready to deliver comprises:
inspecting one or more internal instruction frames associated with the one or more data frames written in the one or more queues; and
determining the one or more queues of the set that are ready to deliver based on the one or more inspected internal instruction frames.

4. The network device (200) according to one of the claims 1 to 3, wherein each queue of the set of queues (300) is of a preconfigured size.

5. The network device (200) according to one of claims 1 to 4, comprising:
N ingress ports and M egress ports, each of N and M being an integer larger than 1,
wherein each queue of the set of queues (300) is connected through crossbars to at least one of the N ingress ports, and at least one of the M egress ports,
wherein the network device (200) is further configured to:
write data frames received at the N ingress ports to the set of queues (300) according to the queueing operation; and
read data frames from the set of queues (300) according to the queueing operation at the at least one of the M egress ports.

6. The network device (200) according to claim 5, wherein each queue of the set of queues (300) is connected through crossbars to each of the N ingress ports, and each of the M egress ports.

7. The network device (200) according to one of claims 1 to 6, configured to:
maintain a table of parameters for the set of queues (300), wherein the table of parameters comprises at least one group parameter applied to all queues of the set of queues (300), and at least one local parameter applied to a particular queue of the set of queues (300).

8. The network device (200) according to claim 7 , wherein one or more parameters in the table of parameters correspond to the internal instruction frames associated with the one or more data frames of the set of queues (300).

9. The network device (200) according to claim 7 or 8, wherein the at least one group parameter comprises at least one of: a number of queues of the set of queues (300), and a size of each queue.

10. The network device (200) according to one of the claims 1 to 9, configured to:
maintain the list of functionality operations, wherein the list of functionality operations indicates for each functionality operation whether it is enabled for the network device (200).

11. A method performed by a network device (200) for queueing, comprising:
maintaining a set (300) of two or more queues (301, 302);
receiving one or more data frames (201);
inspecting each of the one or more data frames (201) and determining at least one functionality operation and a queueing operation based on the inspected data frame;
performing the determined at least one functionality operation and the queueing operation on the data frame (201), based on a status of the two or more queues (301, 302) and the one or more inspected data frames (201),
wherein the received one or more data frames comprise a first data frame (201), and the queueing operation comprises:
selecting a first queue (301) from the set of queues (300) for the first data frame (201) based on the status of the two or more queues (301, 302) and the inspected first data frame (201); and
writing the first data frame (201) to the first queue (301),
wherein the network device (200) is arranged in a data plane and a control plane, wherein each data frame is associated with an internal instruction frame constituted by metadata of that data frame, wherein each of the set of queues (300) is managed in the data plane, and the internal instruction frame is managed in the control plane,
wherein each of the at least one functionality operation is selected from a list of functionality operations by inspecting the internal instruction frame associated with each data frame, wherein the list of functionality operations comprises one or more of: frames buffering, load balancing, priority handling, frames sorting, replicates detection and elimination, frame preemption, frame aggregation, data decryption or encryption, time synchronization, and an operation corresponding to a time-sensitive networking algorithm.

12. A computer program product comprising a program code for carrying out, when the program code is executed by a processor of a computer, the method according to claim 11.

## Patentansprüche

1. Netzwerkvorrichtung (200) zur Warteschlangenbildung, wobei die Netzwerkvorrichtung (200) konfiguriert ist, um:
einen Satz (300) von zwei oder mehr Warteschlangen (301, 302) beizubehalten;
einen oder mehrere Datenrahmen (201) zu empfangen;
jeden der ein oder mehreren Datenrahmen (201) zu untersuchen und mindestens einen Funktionsvorgang und einen Warteschlangenvorgang basierend auf dem untersuchten Datenrahmen (201) zu bestimmen; und
den bestimmen mindestens einen Funktionsvorgang und den Warteschlangenvorgang auf dem Datenrahmen (201) basierend auf dem Status der zwei oder mehr Warteschlangen (301, 302) und des einen oder der mehreren untersuchten Datenrahmen (201) durchzuführen,
wobei die empfangenen ein oder mehreren Datenrahmen einen ersten Datenrahmen (201) umfassen und der Warteschlangenvorgang Folgendes umfasst:
Auswählen einer ersten Warteschlange (301) aus dem Satz von Warteschlangen (300) für den ersten Datenrahmen (201) basierend auf dem Status der zwei oder mehr Warteschlangen (301, 302) und des untersuchten ersten Datenrahmens (201); und
Schreiben des ersten Datenrahmens (201) in die erste Warteschlange (301),
wobei die Netzwerkvorrichtung (200) in einer Datenebene und einer Steuerungsebene angeordnet ist, wobei jedem Datenrahmen ein interner Anweisungsrahmen zugeordnet ist, der aus Metadaten dieses Datenrahmens besteht, wobei jede der Warteschlangen (300) in der Datenebene verwaltet wird und der interne Anweisungsrahmen in der Steuerungsebene verwaltet wird,
wobei jeder der mindestens einen Funktionsvorgänge aus einer Liste von Funktionsvorgängen durch Untersuchung des internen Anweisungsrahmens ausgewählt wird, der jedem Datenrahmen zugeordnet ist, wobei die Liste der Funktionsvorgänge ein oder mehrere der Folgenden umfasst: Rahmenpufferung, Lastverteilung, Prioritätsbehandlung, Rahmensortierung, Erkennung und Beseitigung von Replikaten, Rahmenpräemption, Rahmenaggregation, Datenentschlüsselung oder -verschlüsselung, Zeitsynchronisation und einen Vorgang, der einem zeitempfindlichen Netzwerkalgorithmus entspricht.

2. Netzwerkvorrichtung (200) nach Anspruch 1, ferner konfiguriert, um eine oder mehrere Warteschlangen des Satzes zu ermitteln, die zur Zustellung bereit sind, und einen oder mehrere Datenrahmen aus der oder den zur Zustellung bereiten Warteschlangen zu untersuchen,
wobei eine Warteschlange als bereit zur Zustellung gilt, wenn sie Datenrahmen enthält, die in der richtigen Reihenfolge empfangen wurden, oder wenn sie Datenrahmen enthält, die zwar in falscher Reihenfolge empfangen wurden, aber von allen vorhergehenden Rahmen mit kleineren Sequenznummern begleitet werden.

3. Netzwerkvorrichtung (200) nach Anspruch 2, wobei die Bestimmung der einen oder der mehreren Warteschlangen des Satzes, die zur Zustellung bereit sind, Folgendes umfasst:
Untersuchen des einen oder der mehreren internen Anweisungsrahmen, die dem einen oder den mehreren Datenrahmen zugeordnet sind, die in die eine oder die mehreren Warteschlangen geschrieben wurden; und
Bestimmen der einen oder der mehreren Warteschlangen des Satzes, die zur Zustellung bereit sind, basierend auf dem einen oder den mehreren untersuchten internen Anweisungsrahmen.

4. Netzwerkvorrichtung (200) nach einem der Ansprüche 1 bis 3, wobei jede Warteschlange des Satzes von Warteschlangen (300) eine vordefinierte Größe aufweist.

5. Netzwerkvorrichtung (200) nach einem der Ansprüche 1 bis 4, umfassend:
N Eingangsports und M Ausgangsports, wobei N und M jeweils eine ganze Zahl größer als 1 sind,
wobei jede Warteschlange des Satzes von Warteschlangen (300) über Querbalken mit mindestens einem der N Eingangsports und mindestens einem der M Ausgangsports verbunden ist,
wobei die Netzwerkvorrichtung (200) ferner konfiguriert ist, um:
die an den N Eingangsports empfangenen Datenrahmen gemäß dem Warteschlangenvorgang in den Satz von Warteschlangen (300) zu schreiben; und
Datenrahmen aus dem Satz von Warteschlangen (300) gemäß dem Warteschlangenvorgang an mindestens einem der M Ausgangsports zu lesen.

6. Netzwerkvorrichtung (200) nach Anspruch 5, wobei jede Warteschlange des Satzes von Warteschlangen (300) über Querbalken mit jedem der N Eingangsports und jedem der M Ausgangsports verbunden ist.

7. Netzwerkvorrichtung (200) nach einem der Ansprüche 1 bis 6, konfiguriert um:
eine Parametertabelle für den Satz von Warteschlangen (300) beizubehalten, wobei die Parametertabelle mindestens einen Gruppenparameter umfasst, der auf alle Warteschlangen des Satzes der Warteschlangen (300) angewendet wird, und mindestens einen lokalen Parameter, der auf eine bestimmte Warteschlange des Satzes der Warteschlangen (300) angewendet wird.

8. Netzwerkvorrichtung (200) nach Anspruch 7, wobei der eine oder die mehreren Parameter in der Parametertabelle den internen Anweisungsrahmen entsprechen, die einem oder mehreren Datenrahmen des Satzes an Warteschlangen (300) zugeordnet sind.

9. Netzwerkvorrichtung (200) nach Anspruch 7 oder 8, wobei der mindestens eine Gruppenparameter mindestens eines der Folgenden umfasst: eine Anzahl von Warteschlangen aus dem Satz von Warteschlangen (300) und eine Größe jeder Warteschlange.

10. Netzwerkvorrichtung (200) nach einem der Ansprüche 1 bis 9, konfiguriert um:
die Liste der Funktionsvorgänge beizubehalten, wobei die Liste der Funktionsvorgänge für jeden Funktionsvorgang anzeigt, ob er für die Netzwerkvorrichtung (200) aktiviert ist.

11. Von einer Netzwerkvorrichtung (200) durchgeführtes Verfahren zur Warteschlangenbildung, umfassend:
Beibehalten eines Satzes (300) von zwei oder mehr Warteschlangen (301, 302);
Empfangen eines oder mehrerer Datenrahmen (201);
Untersuchen jedes der ein oder mehreren Datenrahmen (201) und Bestimmen mindestens eines Funktionsvorgangs und eines Warteschlangenvorgangs basierend auf dem untersuchten Datenrahmen;
Durchführen des bestimmten mindestens einen Funktionsvorgangs und des Warteschlangenvorgangs auf dem Datenrahmen (201) basierend auf dem Status der zwei oder mehr Warteschlangen (301, 302) und des einen oder der mehreren untersuchten Datenrahmen (201),
wobei die empfangenen ein oder mehreren Datenrahmen einen ersten Datenrahmen (201) umfassen und der Warteschlangenvorgang Folgendes umfasst:
Auswählen einer ersten Warteschlange (301) aus dem Satz von Warteschlangen (300) für den ersten Datenrahmen (201) basierend auf dem Status der zwei oder mehr Warteschlangen (301, 302) und des untersuchten ersten Datenrahmens (201); und
Schreiben des ersten Datenrahmens (201) in die erste Warteschlange (301),
wobei die Netzwerkvorrichtung (200) in einer Datenebene und einer Steuerungsebene angeordnet ist, wobei jedem Datenrahmen ein interner Anweisungsrahmen zugeordnet ist, der aus Metadaten dieses Datenrahmens besteht, wobei jede der Warteschlangen (300) in der Datenebene verwaltet wird und der interne Anweisungsrahmen in der Steuerungsebene verwaltet wird,
wobei jeder der mindestens einen Funktionsvorgänge aus einer Liste von Funktionsvorgängen durch Untersuchung des internen Anweisungsrahmens ausgewählt wird, der jedem Datenrahmen zugeordnet ist, wobei die Liste der Funktionsvorgänge ein oder mehrere der Folgenden umfasst: Rahmenpufferung, Lastverteilung, Prioritätsbehandlung, Rahmensortierung, Erkennung und Beseitigung von Replikaten, Rahmenpräemption, Rahmenaggregation, Datenentschlüsselung oder -verschlüsselung, Zeitsynchronisation und einen Vorgang, der einem zeitempfindlichen Netzwerkalgorithmus entspricht.

12. Computerprogrammprodukt, umfassend einen Programmcode zur Durchführung des Verfahrens nach Anspruch 11, wenn der Programmcode von einem Prozessor eines Computers ausgeführt wird.

## Revendications

1. Dispositif de réseau (200) pour la mise en file d'attente, dans lequel le dispositif de réseau (200) est configuré pour :
maintenir un ensemble (300) de deux files d'attente ou plus (301, 302) ;
recevoir une ou plusieurs trames de données (201) ;
inspecter chacune des une ou plusieurs trames de données (201) et déterminer au moins une opération de fonctionnalité et une opération de mise en file d'attente sur la base de la trame de données inspectée (201) ; et
réaliser l'au moins une opération de fonctionnalité déterminée et l'opération de mise en file d'attente sur la trame de données (201), sur la base de l'état des deux ou plusieurs files d'attente (301, 302) et des une ou plusieurs trames de données inspectées (201),
dans lequel les une ou plusieurs trames de données reçues comprennent une première trame de données (201), et l'opération de mise en file d'attente comprend :
la sélection d'une première file d'attente (301) parmi l'ensemble de files d'attente (300) pour la première trame de données (201) sur la base de l'état des deux ou plusieurs files d'attente (301, 302) et de la première trame de données inspectée (201) ; et
l'écriture de la première trame de données (201) dans la première file d'attente (301),
dans lequel le dispositif de réseau (200) est organisé en un plan de données et un plan de contrôle, dans lequel chaque trame de données est associée à une trame d'instructions interne constituée par les métadonnées de cette trame de données, dans lequel chaque ensemble de files d'attente (300) est géré dans le plan de données et la trame d'instructions interne est gérée dans le plan de contrôle,
dans lequel chacune de l'au moins une opération de fonctionnalité est sélectionnée à partir d'une liste d'opérations de fonctionnalité en inspectant la trame d'instructions interne associée à chaque trame de données, dans lequel la liste d'opérations de fonctionnalité comprend l'une ou plusieurs des opérations suivantes : la mise en mémoire tampon des trames, l'équilibrage de charge, la gestion des priorités, le tri des trames, la détection et l'élimination des répliques, la préemption des trames, l'agrégation des trames, le décryptage ou le chiffrement des données, la synchronisation temporelle et une opération correspondant à un algorithme de réseau sensible au temps.

2. Dispositif de réseau (200) selon la revendication 1, configuré en outre pour déterminer une ou plusieurs files d'attente de l'ensemble qui sont prêtes à livrer, et inspecter une ou plusieurs trames de données provenant des une ou plusieurs files d'attente qui sont prêtes à livrer,
dans lequel une file d'attente est considérée comme prête à livrer lorsqu'elle contient des trames de données reçues dans l'ordre, ou lorsqu'elle contient des trames de données qui, bien que reçues dans le désordre, sont accompagnées de toutes les trames précédentes ayant des numéros de séquence inférieurs.

3. Dispositif de réseau (200) selon la revendication 2, dans lequel la détermination des une ou plusieurs files d'attente de l'ensemble qui sont prêtes à livrer comprend :
l'inspection des une ou plusieurs trames d'instructions internes associées aux une ou plusieurs trames de données écrites dans les une ou plusieurs files d'attente ; et
la détermination des une ou plusieurs files d'attente de l'ensemble qui sont prêtes à livrer sur la base des une ou plusieurs trames d'instructions internes inspectées.

4. Dispositif de réseau (200) selon l'une quelconque des revendications 1 à 3, dans lequel chaque file d'attente de l'ensemble de files d'attente (300) est d'une taille préconfigurée.

5. Dispositif de réseau (200) selon l'une quelconque des revendications 1 à 4, comprenant :
N ports d'entrée et M ports de sortie, N et M étant chacun un entier supérieur à 1,
dans lequel chaque file d'attente de l'ensemble de files d'attente (300) est reliée par des barres transversales à au moins l'un des N ports d'entrée et à au moins l'un des M ports de sortie,
dans lequel le dispositif de réseau (200) est en outre configuré pour :
écrire les trames de données reçues aux N ports d'entrée dans l'ensemble de files d'attente (300) selon l'opération de mise en file d'attente ; et
lire les trames de données de l'ensemble de files d'attente (300) selon l'opération de mise en file d'attente sur au moins l'un des ports de sortie M.

6. Dispositif de réseau (200) selon la revendication 5, dans lequel chaque file d'attente de l'ensemble de files d'attente (300) est reliée par des barres transversales à chacun des N ports d'entrée et à chacun des M ports de sortie.

7. Dispositif de réseau (200) selon l'une des revendications 1 à 6, configuré pour :
maintenir une table de paramètres pour l'ensemble de files d'attente (300), dans lequel la table de paramètres comprend au moins un paramètre de groupe appliqué à toutes les files d'attente de l'ensemble de files d'attente (300), et au moins un paramètre local appliqué à une file d'attente particulière de l'ensemble de files d'attente (300).

8. Dispositif de réseau (200) selon la revendication 7, dans lequel un ou plusieurs paramètres de la table de paramètres correspondent aux trames d'instructions internes associées aux une ou plusieurs trames de données de l'ensemble de files d'attente (300).

9. Dispositif de réseau (200) selon la revendication 7 ou 8, dans lequel les un ou plusieurs paramètres de groupe comprennent au moins l'un des éléments suivants : un nombre de files d'attente de l'ensemble de files d'attente (300) et une taille de chaque file d'attente.

10. Dispositif de réseau (200) selon l'une des revendications 1 à 9, configuré pour :
maintenir la liste des opérations de fonctionnalité, dans lequel la liste des opérations de fonctionnalité indique pour chaque opération de fonctionnalité si elle est activée pour le dispositif de réseau (200).

11. Procédé de mise en file d'attente mis en œuvre par un dispositif de réseau (200), comprenant :
le maintien d'un ensemble (300) de deux ou plusieurs files d'attente (301, 302) ;
la réception d'une ou plusieurs trames de données (201) ;
l'inspection de chacune des une ou plusieurs trames de données (201) et la détermination d'au moins une opération de fonctionnalité et une opération de mise en file d'attente sur la base de la trame de données inspectée ;
la réalisation de l'au moins une opération de fonctionnalité déterminée et l'opération de mise en file d'attente sur la trame de données (201), sur la base de l'état des deux ou plusieurs files d'attente (301, 302) et des une ou plusieurs trames de données inspectées (201),
dans lequel les une ou plusieurs trames de données reçues comprennent une première trame de données (201), et l'opération de mise en file d'attente comprend :
la sélection d'une première file d'attente (301) parmi l'ensemble de files d'attente (300) pour la première trame de données (201) sur la base de l'état des deux ou plusieurs files d'attente (301, 302) et de la première trame de données inspectée (201) ; et
l'écriture de la première trame de données (201) dans la première file d'attente (301),
dans lequel le dispositif de réseau (200) est organisé en un plan de données et un plan de contrôle, dans lequel chaque trame de données est associée à une trame d'instructions interne constituée par les métadonnées de cette trame de données, dans lequel chaque ensemble de files d'attente (300) est géré dans le plan de données et la trame d'instructions interne est gérée dans le plan de contrôle,
dans lequel chacune de l'au moins une opération de fonctionnalité est sélectionnée à partir d'une liste d'opérations de fonctionnalité en inspectant la trame d'instructions interne associée à chaque trame de données, dans lequel la liste d'opérations de fonctionnalité comprend l'une ou plusieurs des opérations suivantes : la mise en mémoire tampon des trames, l'équilibrage de charge, la gestion des priorités, le tri des trames, la détection et l'élimination des répliques, la préemption des trames, l'agrégation des trames, le décryptage ou le chiffrement des données, la synchronisation temporelle et une opération correspondant à un algorithme de réseau sensible au temps.

12. Produit de programme informatique comprenant un code de programme pour la mise en œuvre, lorsque le code de programme est exécuté par un processeur d'un ordinateur, du procédé selon la revendication 11.
